# EUROPÄISCHE PATENTANMELDUNG

(11) **EP 1 348 828 A2**
(43) Veröffentlichungstag der Anmeldung: **01.10.2003**
(21) Anmeldenummer: 03005719.4
(22) Anmeldetag: 13.03.2003
(51) Int. Cl.: E05F 5/02, F16F 9/48

(54) **Dämpfungsvorrichtung für bewegliche Möbelteile**

(30) Priorität: 28.03.2002 DE 20204986 U
(71) Anmelder: Arturo Salice S.p.A., I-22060 Novedrate (Como) (IT)
(72) Erfinder:
(74) Vertreter: Gossel, Hans K., Dipl.-Ing.

(57) **Zusammenfassung**

Die vorliegende Erfindung betrifft eine Dämpfungsvorrichtung für bewegliche Möbelteile, beispielsweise Türen, Klappen oder Schubladen. Eine derartige Dämpfungsvorrichtung gedrungener Bauart, die eine mögliche rückspringende Bewegung der Möbelteile vermeidet, wird erfindungsgemäß dadurch bereitgestellt, dass die Dämpfungsvorrichtung wenigstens zwei jeweils einen Zylinder mit einem darin längsverschieblichen Kolben aufweisende Dämpfungsstufen aufweist, die eine unterschiedlich starke Dämpfungswirkung ausüben.

## Beschreibung

Die vorliegende Erfindung betrifft eine Dämpfungsvorrichtung für bewegliche Möbelteile, beispielsweise Türen, Klappen oder Schubladen.

Derartige Dämpfungsvorrichtungen sind in zahlreichen unterschiedlichen Ausführungsformen bekannt. Die DE 44 09 716 A1 zeigt einen aus einem Kolben und einem Zylinder bestehenden Luftdämpfer, dessen Kolben beim Eintauchen in den Zylinder durch die komprimierte Luft im Zylinder gebremst wird, wobei das Entweichen der Luft durch eine Dichtung weitgehend verhindert wird, durch die der Kolben beim Eintauchen in den Zylinder bewegt wird. Die DE 37 29 597 A1 zeigt ebenfalls eine Dämpfungsvorrichtung mit einem Zylinder und einem darin längs verschieblich aufgenommenen Kolben. In dem Zylinder ist ein Zapfen mit sich in Längsrichtung änderndem Durchmesser aufgenommen, der in dem als Hohlkolben ausgeführten Kolben geführt wird. Die in dem Zylinder beim Einführen des Kolbens komprimierte Luft wird je nach Position des Kolbens durch den Ringspalt zwischen dem Zapfen und der Bohrung des Kolbens entspannt.

Dämpfungsvorrichtungen der eingangs genannten Art sind ferner aus der DE 201 20 112.7 bekannt. Darin werden Luftdämpfer offenbart, die in der Mantelwand des Zylinders nahe dem geschlossenen Endbereich eine Bohrung aufweisen, wodurch sich eine sehr gute Dämpfungswirkung erreichen läßt.

Werden Möbelteile mit großer Kraft bzw. Geschwindigkeit geschlossen, so kann die Bewegungsenergie bei Berührung mit den vorgenannten Dämpfern von diesen nicht, sofort vollständig abgefangen werden, so daß es vorkommen kann, daß die Möbelteile rückspringen, bevor sie von Schließvorrichtungen in ihre endgültige Schließstellung gezogen werden. Aus der JP 0020279886 AA ist ein Türdämpfungselement bekannt, das aus einem elastischen Dämpfungsteil und einem Öldämpfer besteht. Das elastische Dämpfungsteil soll bewirken, daß das Auftreffen der Tür abgedämpft wird. Die verbleibende kinetische Energie soll von dem Öldämpfer aufgenommen werden.

Es ist die Aufgabe der vorliegenden Erfindung, eine Dämpfungsvorrichtung der eingangs genannten Art zu schaffen, die bei gedrungener Bauart eine mögliche rückspringende Bewegung der Möbelteile vermeidet.

Diese, Aufgabe wird durch eine Dämpfungsvorrichtung mit den Merkmalen des Anspruchs 1 gelöst. Erfindungsgemäß weist die Dämpfungsvorrichtung wenigstens zwei jeweils einen Zylinder mit einem darin längs verschieblichen Kolben aufweisende Dämpfungsstufen auf, die eine unterschiedlich starke Dämpfungswirkung ausüben. Die Bremswirkung ist somit in zwei Stufen unterteilt, die dahingehend unterschiedlich ausgeführt sind, daß sie bei ihrer Betätigung unterschiedlich starke Bremswirkungen ausüben. Beispielsweise kann vorgesehen sein, daß die Bremswirkung durch zwei Dämpfungsstufen erreicht wird, von denen die erste eine verhältnismäßig schwache Feder und die zweite Dämpfungsstufe einen üblichen Luftdämpfer aufweist. Bei einer derartigen Ausführungsform wird die Bewegung des Möbelteils zunächst hauptsächlich durch die Federkraft herabgesetzt, während die folgende Dämpfungsstufe nur teilweise beansprucht wird. Die verbleibende, durch die erste Stufe bereits verringerte Bewegungsenergie wird dann von der zweiten Dämpfungsstufe vollständig abgefangen. Zwischen beiden Stufen ergibt sich somit eine progressive Bremswirkung, wodurch durch Rücksprünge der Möbelteile vermieden werden.

Die Dämpfungsvorrichtung kann aus zwei Dämpfungsstufen bestehen. Selbstverständlich sind auch mehr als zwei Dämpfungsstufen realisierbar. Die Ausführung der Dämpfungsvorrichtung mit teleskopierbaren Zylindern ergibt eine besonders kompakte Ausgestaltung der Dämpfungsvorrichtung.

In bevorzugter Ausgestaltung der vorliegenden Erfindung weist die Dämpfungsvorrichtung einen mehrstufigen, vorzugsweise zweistufigen Teleskopzylinder auf, dessen erste Dämpfungsstufe einen durch eine Feder belasteten; in einem teleskopierbaren Zylinder aufgenommenen Kolben aufweist und dessen zweite Dämpfungsstufe durch einen Luftdämpfer gebildet wird. Die Ausführung einer Dämpfungsvorrichtung mit mehrstufigen Teleskopzylindern ist beispielsweise aus der bereits genannten DE 201 20 112.7 sowie auch der DE 201 17 031.0 bekannt. Dämpfungsvorrichtungen dieser Art zeichnen sich durch eine sehr geringe Länge bzw. Einbautiefe aus, so daß eine besonders gedrungene Bauart realisierbar ist.

Zwischen dem Kolben und dem Zylinder der ersten Dämpfungsstufe kann ein Luftspalt bestehen, so daß die Bremswirkung der ersten Dämpfungsstufe im Wesentlichen durch die auf den Kolben wirkende Kraft der Feder hervorgerufen wird.

In weiterer Ausgestaltung der vorliegenden Erfindung ist vorgesehen, daß der Zylinder der ersten Dämpfungsstufe einen mit diesem fest verbundenen Kolben aufweist, der eine in einer Nut aufgenommene umlaufende Dichtung aufweist, die sich in Einschubrichtung dichtend an die Wandung des Zylinders der nachfolgenden Dämpfungsstufe anlegt und die sich in Auszugsrichtung an die Nutwandung anlegt.

Während bei der Einschubbewegung somit eine Kompression der im Zylinderraum befindlichen Luft erfolgt und somit die gewünschte Dämpfungswirkung des Luftdämpfers erzielt wird, kann beim Herausziehen Luft zwischen Kolben und der Zylinderwand passieren, so daß sich der Kolben frei und leicht nach außen ziehen läßt.

Die Dichtung ist vorteilhaft in einer Nut des Kolbens aufgenommen, die über Kanäle mit dem Innenraum des Zylinders der nachfolgenden Dämpfungsstufe in Verbindung steht. Beim Herausziehen des Kolbens strömt Luft durch die Kanäle, so daß wie oben beschrieben, der Kolben frei nach außen gezogen werden kann.

Weiterhin kann vorgesehen sein, daß der Kolben der ersten Dämpfungsstufe und der Kolben der zweiten Dämpfungsstufe jeweils eine Ausnehmung aufweisen, in denen die Endbereiche der Feder der ersten Dämpfungsstufe aufgenommen sind.

In weiterer Ausgestaltung der Erfindung ist vorgesehen, daß der Zylinder der ersten Dämpfungsstufe einen Ringflansch aufweist, mittels dessen sich dieser in der Ausgangslage an einem stirnseitigen Bund des Zylinders der zweiten Dämpfungsstufe abstützt.

Der Zylinder der ersten Dämpfungsstufe kann einen Ringbund aufweisen, an dem sich der Kolben der ersten Dämpfungsstufe in der Ausgangslage abstützt.

In bevorzugter Ausgestaltung der vorliegenden Erfindung wird die letzte bzw. bei zweistufiger Ausführung die zweite Dämpfungsstufe durch einen Luftdämpfer gebildet, dessen Zylinder nahe dem geschlossenen Endbereich in der Mantelwand eine Bohrung aufweist, deren Durchmesser den des Zylinders wesentlich unterschreitet. Hierbei wird Bezug genommen auf die DE 201 20 112.7, aus der sich eine Dämpfungsvorrichtung mit einer entsprechend angeordneten Bohrung ergibt.

In weiterer Ausgestaltung der vorliegenden Erfindung ist vorgesehen, daß der Kolben der ersten Dämpfungsstufe einen Stößel aufweist, in dessen Endbereich ein Magnet angeordnet ist. Dieser bewirkt, daß die Dämpfungsvorrichtung beim Öffnen des beweglichen Möbelteils wieder in ihre Ausgangslage bewegt wird und dann für einen erneuten Dämpfungsvorgang zur Verfügung steht.

Weiterhin kann vorgesehen sein, daß in der letzten Dämpfungsstufe eine Feder vorgesehen ist, die sich am Boden des Zylinders der letzten Dämpfungsstufe abstützt und auf dem Kolben dieser Dämpfungsstufe eine Rückstellkraft ausübt. Diese Feder führt den Kolben dieser Dämpfungsstufe in seine Ausgangslage zurück.

In diesem Fall kann vorgesehen sein, daß der Kolben der ersten Dämpfungsstufe einen Stößel aufweist, in dessen Endbereich ein Puffer angeordnet ist.

Besonders vorteilhaft ist es, wenn die erste Dämpfungsstufe eine geringere Dämpfungswirkung ausübt als die zweite Dämpfungsstufe. Dabei kann vorgesehen sein, daß die zweite Dämpfungsstufe derart ausgelegt ist, daß deren Anlaufreibung während der Betätigung der ersten Dämpfungsstufe überwunden wird. Dadurch läßt sich ein weicher Übergang der Bremswirkung der Dämpfungsstufen erzielen, wodurch ein Rückspringen der Möbelteile weitgehend vermieden werden kann.

Weitere Einzelheiten und Vorteile der vorliegenden Erfindung werden anhand eines in der Zeichnung dargestellten Ausführungsbeispiels näher erläutert. Es zeigen:
- Fig. 1:: Eine Schnittdarstellung durch eine erste Ausführungsform der erfindungsgemäßen Dämpfungsvorrichtung in ihrer Ausgangslage,
- Fig. 2, 3:: einen Schnitt durch die Dämpfungsvorrichtung gemäß Figur 1 in teilweise und vollständig eingeschobener Position,
- Fig. 4:: einen Schnitt durch eine weitere Ausführungsform der erfindungsgemäßen Dämpfungsvorrichtung in ihrer Ausgangslage und
- Fig. 5 - 9:: Einzelteile der Dämpfungsvorrichtung gemäß Figur 1 bis 4.

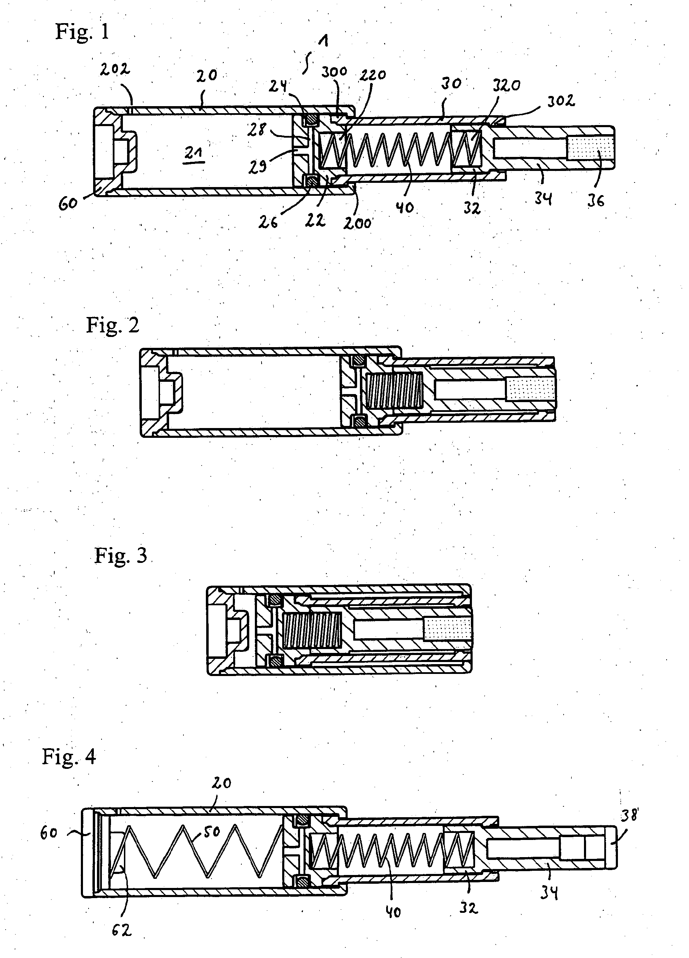

Aus Figur 1 ist eine erfindungsgemäße Dämpfungsvorrichtung 1 ersichtlich. Diese besteht aus zwei Dämpfungsstufen, von denen die erste den Zylinder 30 mit Kolben 32 und die zweite den Zylinder 20 mit Kolben 22 aufweist.

In dem Zylinder 30 der ersten Dämpfungsstufe ist der Kolben 32 längsverschieblich geführt. Der Kolben 32 weist einen mit diesem einstückigen Stößel 34 auf, in dessen Endbereich der Magnet 36 angeordnet ist.

In seinem Endbereich weist der Zylinder 30 den mit diesem fest verbundenen Kolben 22 der zweiten Dämpfungsstufe auf. Die Verbindung kann beispielsweise durch Ultraschallschweißen erfolgen.

Der Kolben 22 ist verschieblich in dem Zylinder 20 der zweiten Dämpfungsstufe geführt.

Der Kolben 32 weist die Ausnehmung 320 auf und der Kolben 22 weist die Ausnehmung 220 auf, in denen die Endbereiche der Feder 40 der ersten Dämpfungsstufe aufgenommen sind.

Der Kolben 32 stützt sich in seiner in Figur 1 dargestellten Ausgangslage an den Ringbund 302 des Zylinders 30 ab. Ferner stützt sich in der Ausgangslage der Zylinder 30 mittels seines Ringflansches 300 an den stirnseitigen Bund 200 des Zylinders 20 ab, wie dies in Figur 1 dargestellt ist.

Der Kolben 32 ist in dem Zylinder 30 derart geführt, daß zwischen Kolben 32 und der Zylinderinnenwandung ein Luftspalt verbleibt, durch den die Luft derart strömen kann, daß die Bewegung des Kolbens 32 im wesentlichen nur gegen die Kraft der Feder 40 erfolgt, so daß die Dämpfungscharakteristik dieser ersten Dämpfungsstufe ganz wesentlich durch die Feder 40 bestimmt wird.

Der Kolben 22 der zweiten Dämpfungsstufe weist die Ringnut 24 auf, in der die Dichtung 26 aufgenommen ist. Die Nut 24 steht mittels der Kanäle 28 und 29 mit dem Innenraum 21 des Zylinders 20 der zweiten Dämpfuhgsstufe in Verbindung.

Der Endbereich des Zylinders 20 ist durch die Kappe 60 verschlossen, die fest beispielsweise durch Ultraschallschweißen oder durch andere übliche Mittel mit dem Zylinder 20 verbunden ist. Im Endbereich der Mantelflächen des Zylinders 20 befindet sich die Bohrung 202, durch die Luft beim Eindrücken des Kolbens 22 in den Zylinder 20 in kontrollierter Weise entweicht, wodurch die Dämpfungswirkung der zweiten Dämpfungsstufe bewirkt wird.

Die Funktionsweise der in Figur 1 dargestellten Dämpfungsvorrichtung gestaltet sich wie folgt: Beim Eindrücken des Stößels 34 wird zunächst die Feder 40 komprimiert, die der Eindrückkraft einen geringen Widerstand entgegensetzt, als die zweite, durch den Luftdämpfer gebildete Dämpfungsstufe. Dies hat zur Folge, daß der Kolben 32 in Richtung des Kolbens 22 bewegt wird, bis die Stirnseiten der Kolben einander berühren, wie dies in Figur 2 dargestellt ist. Durch das Einschieben des Kolbens 32 wird ein Teil der Bewegung des Möbelteils abgefangen und die Bewegungsenergie entsprechend verringert. Diese wird nun anschließend von der zweiten Dämpfungsstufe aufgenommen, deren Funktion sich wie folgt gestaltet:

Ausgehend von der in Figur 2 dargestellten Position wird nun der Zylinder 30 mit Kolben 22 in den Zylinder 20 eingeführt. Dabei wird die Luft in dem Innenraum 21 komprimiert, wodurch der Druck auch in den Kanälen 28 und 29 sowie in der Nut 24 steigt, so daß die Dichtung 26 an die Innenwandung des Zylinders 20 gepreßt wird. Dies hat zur Folge, daß die Luft im Wesentlichen nur durch die Bohrung 202 entweichen kann. Die von der Luft aufgebrachte Gegenkraft führt zu einer weiteren Dämpfung der Bewegung des Möbelteils, bis der Zylinder 30 vollständig in dem Zylinder 20 aufgenommen ist, wie dies in Figur 3 dargestellt ist.

Vorteilhaft ist die Dämpfungswirkung der zweiten Dämpfungsstufe derart ausgelegt, daß die während der Kompression der Feder 40 auch auf die zweite Dämpfungsstufe erfolgende Teilbelastung zu einer Überwindung der Anlaufreibung führt. Dies hat den Vorteil, daß die zweite Dämpfungsstufe unmittelbar nach dem in Figur 2 dargestellten Zustand in Bewegung gesetzt wird, so daß eine progressive Wirkung der Dämpfungsvorrichtung erzielt wird und Rücksprünge der Möbelteile vermieden werden können.

Figur 4 zeigt eine weitere Ausführungsform der erfindungsgemäßen Dämpfungsvorrichtung. Die hier dargestellten Elemente entsprechend im Wesentlichen den in Figur 1 dargestellten. Eine Ausnahme hiervon bildet die Feder 50, die sich zwischen dem Boden 60 des Zylinders 20 und der diesem zugewandten stirnseitigen Fläche des Kolbens 22 der zweiten Dämpfungsstufe abstützt. Die Feder 50 ist auf dem Ansatz 62 des Bodens 60 fixiert. Die Feder 50 bewirkt, daß auf den Kolben 22 eine Rückstellkraft ausgeübt wird, so daß dieser bei nicht vorhandener Beanspruchung in die in Figur 4 dargestellte Position zurückgeschoben wird. Entsprechendes gilt für die Wirkung der Feder 40 auf den Kolben 32.

In der in Figur 4 dargestellten Ausführungsform ist der Endbereich des Stößels 34 nicht mit einem Magneten, sondern mit dem Puffer 38 ausgestattet.

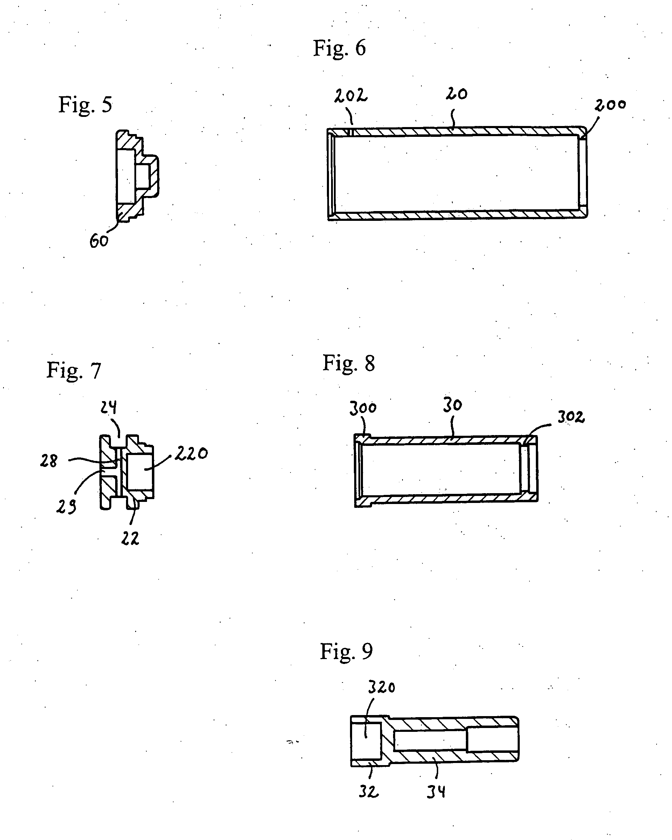

Die Figuren 5 bis 9 zeigen Einzelteile der oben beschriebenen Dämpfungsvorrichtungen gemäß der vorliegenden Erfindung. Figur 5 zeigt den Boden 60 des Zylinders 20, der mit diesem vorzugsweise durch Ultraschallschweißen oder auch durch andere Verbindungstechniken fest und luftdicht verbunden wird, um Sicherzustellen, daß die Luft ausschließlich durch die Bohrung 202 entweicht.

Figur 6 zeigt den Zylinder 20 der zweiten Dämpfungsstufe mit Bohrung 202 und dem stirnseitigen Bund 200, der in der in Figur 1 und in Figur 4 dargestellten Ausgangslage den Ringflansch 300 des Zylinders 30 hält.

Figur 7 zeigt den Kolben 22 mit Ringnut 24 und den Kanälen 28, 29, wobei sich die Kanäle 28 radial und der Kanal 29 axial zum Zylinder 20 bzw. Kolben 22 erstrecken. In Figur 7 ist ferner die Ausnehmung 220 ersichtlich, die dazu dient, einen Endbereich der Feder 40 aufzunehmen, deren anderer Endbereich in der Ausnehmung 320 des Kolbens 32 aufgenommen ist.

Figur 8 zeigt den teleskopierbaren Zylinder 30, der im eingeschobenen Zustand der Dämpfungsvorrichtung in den Zylinder 20 aufgenommen ist, wie dies aus Figur 3 hervorgeht. Der Zylinder 30 weist den ringförmigen Flansch 300 auf, der in der Ausgangslage an dem stirnseitigen Bund 200 des Zylinders 20 anliegt. Ferner weist der Zylinder 30 den Ringbund 302 auf, der dazu dient, den Kolben 32 in der Ausgangslage entsprechend der Figuren 1 und 4 zu halten.

Figur 9 zeigt schließlich den Kolben 32 mit dem einstückig sich daran anschließenden Stößel 34. Die Ausnehmung 320 dient zur Aufnahme eines Endbereichs der Feder 40; die rechts dargestellte Ausnehmung des Stößels 34 dient zur Aufnahme eines Magneten 36 (siehe Figur 1) oder des Puffers 38 (siehe Figur 4).

Die vorliegenden Ausführungsbeispiele zeigen die zweite Dämpfungsstufe als Luftdämpfer und die erste Dämpfungsstufe als federbelasteten Dämpfer. Grundsätzlich sind hier auch andere Ausführungsformen denkbar. Beispielsweise könnte der Luftdämpfer auch von einer anderen üblichen Dämpfungseinrichtung gebildet werden.

## Patentansprüche

1. Dämpfungsvorrichtung (1) für bewegliche Möbelteile, beispielsweise Türen, Klappen oder Schubladen,
**dadurch gekennzeichnet,**
**daß** die Dämpfungsvorrichtung (1) wenigstens zwei jeweils einen Zylinder (20, 30) mit einem darin längs verschieblichen Kolben (22, 32) aufweisende Dämpfungsstufen aufweist, die eine unterschiedlich starke Dämpfungswirkung ausüben.

2. Dämpfungsvorrichtung nach Anspruch 1, **dadurch gekennzeichnet, daß** zwei Dämpfungsstufen vorgesehen sind.

3. Dämpfungsvorrichtung nach Anspruch 1 oder 2, **dadurch gekennzeichnet, daß** die Dämpfungsvorrichtung einen mehrstufigen, vorzugsweise zweistufigen Teleskopzylinder aufweist, dessen erste Dämpfungsstufe einen durch eine Feder (40) belasteten, in einem teleskopierbaren Zylinder (30) aufgenommenen Kolben (32) aufweist und dessen zweite Dämpfungsstufe durch einen Luftdämpfer gebildet wird.

4. Dämpfungsvorrichtung nach Anspruch 3, **dadurch gekennzeichnet, daß** zwischen dem Kolben (32) und dem Zylinder (30) der ersten Dämpfungsstufe ein Luftspalt besteht, so daß die Bremswirkung der ersten Dämpfungsstufe im Wesentlichen durch die auf den Kolben (32) wirkende Kraft der Feder (40) hervorgerufen wird.

5. Dämpfungsvorrichtung nach einem der Ansprüche 1 bis 4, **dadurch gekennzeichnet, daß** der Zylinder (30) der ersten Dämpfungsstufe einen mit diesem fest verbundenen Kolben (22) aufweist, der eine in einer Nut (24) aufgenommene umlaufende Dichtung (26) aufweist, die sich in Einschubrichtung dichtend an die Wandung des Zylinders (20) der nachfolgenden Dämpfungsstufe anlegt und die sich in Auszugsrichtung an die Nutwandung anlegt.

6. Dämpfungsvorrichtung nach Anspruch 5, **dadurch gekennzeichnet, daß** die Dichtung (26) in einer Nut (24) des Kolbens (22) aufgenommen ist, die über Kanäle (28, 29) mit dem Innenraum (21) des Zylinders (20) der nachfolgenden Dämpfungsstufe in Verbindung steht.

7. Dämpfungsvorrichtung nach einem der Ansprüche 1 bis 6, **dadurch gekennzeichnet, daß** der Kolben (32) der ersten Dämpfungsstufe und der Kolben (22) der zweiten Dämpfungsstufe jeweils eine Ausnehmung (220, 320) aufweisen, in denen die Endbereiche der Feder (40) der ersten Dämpfungsstufe aufgenommen sind.

8. Dämpfungsvorrichtung nach einem der Ansprüche 1 bis 7, **dadurch gekennzeichnet, daß** der Zylinder (30) der ersten Dämpfungsstufe einen Ringflansch (300) aufweist, mittels dessen sich dieser in der Ausgangslage an einem stirnseitigen Bund (200) des Zylinders (20) der zweiten Dämpfungsstufe abstützt.

9. Dämpfungsvorrichtung nach einem der Ansprüche 1 bis 8, **dadurch gekennzeichnet, daß** der Zylinder (30) der ersten Dämpfungsstufe einen Ringbund (302) aufweist, an dem sich der Kolben (32) der ersten Dämpfungsstufe in der Ausgangslage abstützt.

10. Dämpfungsvorrichtung nach einem der Ansprüche 1 bis 9, **dadurch gekennzeichnet, daß** die letzte Dämpfungsstufe durch einen Luftdämpfer gebildet wird, dessen Zylinder (20) nahe dem geschlossenen Endbereich in der Mantelwand eine Bohrung (202) aufweist, deren Durchmesser den des Zylinders (20) wesentlich unterschreitet.

11. Dämpfungsvorrichtung nach einem der Ansprüche 1 bis 10, **dadurch gekennzeichnet, daß** der Kolben (32) der ersten Dämpfungsstufe einen Stößel (34) aufweist, in dessen Endbereich ein Magnet (36) angeordnet ist.

12. Dämpfungsvorrichtung nach einem der Ansprüche 1 bis 11, **dadurch gekennzeichnet, daß** in der letzten Dämpfungsstufe eine Feder (50) vorgesehen ist, die sich am Boden (60) des Zylinders (20) der letzten Dämpfungsstufe abstützt und auf den Kolben (22) dieser Dämpfungsstufe eine Rückstellkraft ausübt.

13. Dämpfungsvorrichtung nach Anspruch 12, **dadurch gekennzeichnet, daß** der Kolben (32) der ersten Dämpfungsstufe einen Stößel (34) aufweist, in dessen Endbereich ein Puffer (38) angeordnet ist.

14. Dämpfungsvorrichtung nach einem der Ansprüche 1 bis 13, **dadurch gekennzeichnet, daß** die erste Dämpfungsstufe eine geringere Dämpfungswirkung ausübt als die zweite Dämpfungsstufe.

15. Dämpfungsvorrichtung nach Anspruch 14, **dadurch gekennzeichnet, daß** die zweite Dämpfungsstufe derart ausgelegt ist, daß deren Anlaufreibung während der Betätigung der ersten Dämpfungsstufe überwunden wird.
